# EUROPEAN PATENT APPLICATION

(11) **EP 3 440 971 A1**
(43) Date of publication of application: **13.02.2019**
(21) Application number: 17778721.5
(22) Date of filing: 03.04.2017
(51) Int. Cl.: A47K 3/28, E03C 1/04

(54) **EFFICIENT SHOWER TRAY WITH A STATIC HEAT RECOVERY DEVICE INTEGRATED IN ITS SURFACE, ACCESSIBLE AND EASY TO CLEAN**

(30) Priority: 06.04.2016 ES 201630423
(71) Applicant: González Valiente, César, 46680 Algemesi (ES); Baguena Saez, Ricardo, 4600 Alzira (ES); Almodovar Caballero, Angel Salvador, 46610 Guadassuar (ES)
(72) Inventor: González Valiente, César, 46680 Algemesi (ES); Baguena Saez, Ricardo, 4600 Alzira (ES); Almodovar Caballero, Angel Salvador, 46610 Guadassuar (ES)
(74) Representative: Isern Patentes y Marcas S.L.
(86) International application number: PCT/ES2017/070200
(87) International publication number: WO 2017/174845

(57) **Abstract**

Efficient shower tray with a static heat recovery device integrated in its surface, accessible and easy to clean that channels used water, causing it to run over the outer surface of a flat heat exchanger integrated in the surface of the tray, while cold water which is pre-heated before being mixed circulates inside the heat exchanger, reducing the quantity of hot water required and hence the energy required for heating water. The outer surface over which used grey water runs is accessible and easy to clean, thus ensuring simple and continuous maintenance, and the flat design of the heat exchanger allows the heat exchanger to be mounted flush with a surface, with a reduced height, and to be used without restrictions by persons having reduced mobility.

The assembly can accommodate a grey water lifting pump in order to conduct the water for re-use or discharge.

## Description

### Field of the invention

The present invention falls within the sectors of grey water heat recovery devices, energy efficiency, sanitary fittings with shower trays and accessibility systems for people with reduced mobility.

### Background of the invention

The energy demand in the production of household sanitary hot water is a major portion of the total expenditure of households, most of the water is used in the shower and is evacuated from the home to the exterior at consumption temperature, approximately 38 °C. When the shower is running, the evacuation to the outside of the grey water and the entrance of the cold water to be heated and used occur simultaneously.

Grey water heat recovery to transfer such heat to the cold water achieves energy savings of between 40% and 50%.

There are grey water heat recovery devices in the market with different concepts of design and form of the application, and all of them due to one or for various reasons fail to provide the advantages acquired with the present invention:
Recovery devices integrated in the grey water evacuation line (difficult access, placement, and cleaning).
Static surface recovery devices (which hinder the accessibility for disabled persons and have a limited availability of aesthetic designs)
Recovery devices installed in drainage sumps (Difficult to clean, maintenance without access and difficult location).

### Description of the invention

The present invention relates to a heat recovery device in an element composed of a shower tray that channels used water, causing it to run over the outer surface of a flat heat exchanger integrated in the surface of the flat tray. Cold water which is pre-heated before mixing with the hot water circulates inside the heat exchanger. This reduces the quantity of hot water required and hence an energy saving.
The outer surface over which used grey water runs is accessible and easy to clean.

The present invention is a conceptual development that manages to combine needs, advantages and the following characteristics:
a.- Suitability for cleaning, surface aspect. (According to UNE EN 14527)
The design made with the flat heat exchanger located on the surface enables continuous access and viewing thereof.

However, tubular heat exchangers are less hygienic and if also hidden, their performance is reduced by the dirt factor on the heat exchanger walls, both aspects limiting the convenience of the installation thereof.
b.- Accessibility for people with reduced mobility. The design of flat shower tray assembly with flat heat exchanger on the surface enables the manufacture of thin-profile trays, an essential requirement for making accessible showers, and enables unrestricted use for people with reduced mobility.
c. - Its installation needs no more additional work on the framing than that required for other flat shower trays without heat exchangers.
d.- Heat exchanger on the surface but outside the standing area. As it is placed in the side area near the heat exchanger wall, which is cooler, it will not be stepped on by the user.
e.- The assembly is an integral piece without the need of mobile parts for proper operation.
f.- Sandwich-panel-type flat heat exchanger. Preheated sanitary water circulates inside and the grey water runs over the outer upper part.
g. It saves energy regardless of the sources, either renewable or fossil.

In short, it solves grey water heat recovery in the shower being easy to install in new homes, in refurbishments and in work structures made for people with reduced mobility.

Optionally provided with an auxiliary element that can be integrated. It is a pumping system that recovers the water before being lost down the drain in order to reuse it. Its incorporation into the system increases the energy efficiency of the assembly, achieving even greater energy savings and the possible reuse of grey water for other uses.

The invention comprises an integral assembly with two main components, a flat shower tray that channels grey water at the side and a flat heat exchanger in the heat recovery channel.

The simplicity of the invention allows its manufacture in economy of scale, in series, being easy to install with technical characteristics that jointly, and some separately, make it possible to improve the energy efficiency in the installations. The invention provides the following functions.
1. Preheating of cold water to be mixed with hot water by heat recovery from residual grey water.
2. Channelling of the grey water to the heat exchanger.
3. Use by people with reduced mobility is possible due to its low height.
4. The heat exchanger is easy to clean and maintain.
5. Easy to assemble.

The assembly of the invention can be manufactured in series, with the following applications and qualities:
a) Significant energy saving.
b) Easy to install.
c) No maintenance is required.
d) Having a very long obsolescence, possibly the same as that of the house itself.
e) May be installed in energy reforms of homes. It recovers heat from fluids evacuated to the exterior of the home itself.
f) May be installed in reforms for accessible homes, because its design allows for a very low height.
g) Easy to install when replacing bath tubs with shower trays.
h) Allows multiple designs, colours and materials.

### Brief description of the drawings

Below is a very brief description of a series of drawings for a better understanding of the invention. They are expressly related to an embodiment of said invention, which is presented as an example without limiting the scope thereof.
Figure 1 is a perspective sketch of a possible form of manufacture of the assembly of the invention with the grey water collection tank and the grey water lifting pump.
Figure 2 shows an exploded perspective view thereof.

### Description of a preferred embodiment of the invention

The energy-efficient shower tray proposed by the invention is based on a manufacturing form valid for multiple types of installations in which there is hot water consumption in the shower. For example, the mounted efficient shower tray assembly (10) is shown, provided with a shower platform (20) that receives the water from the shower and directs it toward a side water-flow channel (30) in which the flat sandwich panel-type heat exchanger (40) is located that is provided with a cold water inlet (50) and a preheated water outlet (60), the grey water used in the shower being directed towards the grey water evacuation and collection point (70) leaving part of its energy in the water simultaneously entering the network. The side water-flow channel (30) in which is located the flat sandwich panel-type heat exchanger (40) is located can be covered by a front channel lid (80) and another side channel lid (90) which can be easily removed for cleaning of the flat sandwich panel-type heat exchanger (40). The function of the lids (80) and (90) is largely aesthetic and to do make the base is almost under use conditions.

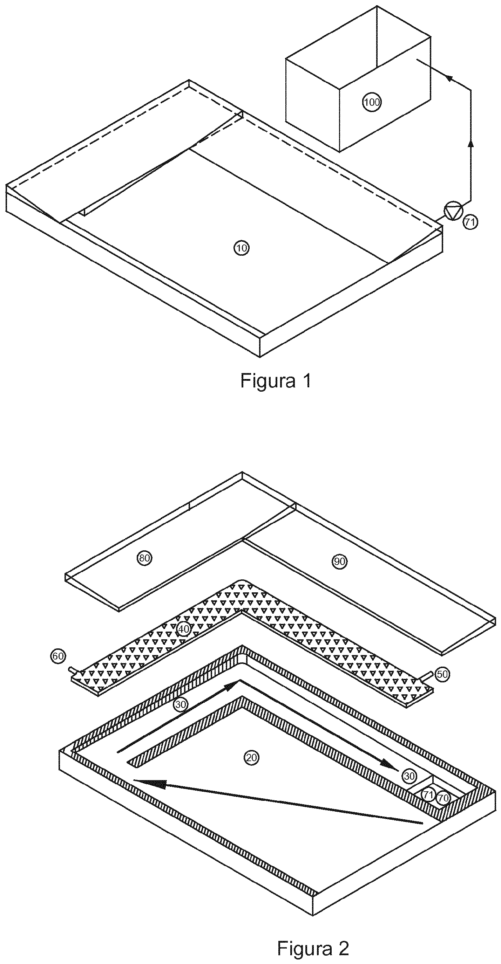

Thus a single equipment, as shown in figures 1 and 2, comprises the elements necessary to achieve the desired functions, with a cold water inlet (50), a preheated water outlet (60), a grey water evacuation and collection point (70). This location (70) can incorporate a gap with a grey water lifting pump (71), which recovers the water before being definitively lost down the drain in order to reuse it.

As shown in the drawing this unit consists of four basic elements that together perform the required functions, a shower platform (20), a flat sandwich panel-type heat exchanger (40) and removable lids (80) and (90) covering the channel and a grey water lifting pump (71), which recovers the water before it being ultimately lost down the drain situated at the grey water evacuation and collection point (70).

Listed below are the components of the invention with their numerical reference:
10.- Mounted efficient shower tray assembly.
20.- Shower platform.
30.- Side water-flow channel.
40.- Flat sandwich panel-type heat exchanger.
50.- Cold water inlet.
60.- Preheated water outlet.
70.- Grey water evacuation and collection point.
71.- Grey water lifting pump.
80.- Front channel lid.
90.- Side channel lid.
100.- Grey water collection tank.

Thus, the invention relates to a mounted efficient shower tray assembly (10), which recovers the heat from the grey water before being evacuated to the outside of the building, and which has:
A platform having:
   Slopes that direct the grey water into a side water-flow channel (30) which serves as the route, facilitates the contact between the flat sandwich panel-type heat exchanger (40) with network water inside and the grey water running towards an evacuation point (70), with the possibility of a subsequent use.
A flat heat exchanger having:
   A cold water inlet (50), a preheated water outlet (60) and an exchange surface that collects the heat from the grey water to preheat the shower water.
Side and front channel lids:
   They are used to provide a flat surface on the mounted efficient shower tray assembly (10) and which can be removed to clean the surface of the heat exchanger.

## Claims

1. Flat and efficient shower tray, with a flat sandwich panel-type heat recovery device integrated in its surface, placed in a side channel, accessible for cleaning, having:
A shower platform (20) that receives the water from the shower and directs it by slopes towards the side water-flow channel (30).
The side water-flow channel (30) is located on any side of the shower platform (20). Located in the side water-flow channel there is a heat exchanger, flat sandwich panel-type heat exchanger (40) that only comes into contact with the grey water on the upper side of the heat exchanger, which has a cold water inlet (50) and a preheated water outlet (60).
The grey water used in the shower runs along the water-flow side channel (30), in contact with the upper part of the flat sandwich panel-type heat exchanger (40), toward the grey water evacuation and collection point (70).
The grey water from the shower, leaves along its route part of the energy in the network water, which enters through the cold water inlet (50) and exits for use through the preheated water outlet (60).

2. Flat and efficient shower tray, with a flat sandwich panel-type heat recovery device integrated in its surface, placed in a side channel, accessible for cleaning, according to claim 1, **characterised in that** the channel is further covered with a front lid (80) and another side lid (90) which are removable for access and cleaning of the flat sandwich panel-type heat exchanger (40).
The function of the lids (80) and (90) is aesthetic and to provide the shower tray assembly with a flat surface.

3. Flat and efficient shower tray, with a flat sandwich panel-type heat recovery device integrated in its surface, placed in a side channel, accessible for cleaning, according to claim 1, **characterised in that** it further comprises a grey water evacuation and collection point (70) which houses a grey water lifting pump (71), to direct it to the drain and/or a grey water collection tank (100).
